# EUROPÄISCHE PATENTSCHRIFT

(11) **EP 1 821 072 B1**
(45) Veröffentlichungstag und Bekanntmachung des Hinweises auf die Patenterteilung: **27.07.2011**
(21) Anmeldenummer: 06025921.5
(22) Anmeldetag: 14.12.2006
(51) Int. Cl.: G01D 5/12, F15B 15/28

(54) **Vorrichtung zur Erfassung der Axialposition und Winkelposition eines Körpers**
Device for recording the axial and angular position of a body
Dispositif destiné à la saisie de la position axiale et la position d'inclinaison d'un corps

(30) Priorität: 18.02.2006 DE 102006007594
(43) Veröffentlichungstag der Anmeldung: 22.08.2007
(73) Patentinhaber: FESTO AG & Co. KG, 73734 Esslingen (DE)
(72) Erfinder: Reininger, Thomas, Dr. rer. nat., 73249 Wernau (DE)
(74) Vertreter: Kocher, Mark Werner

(56) Entgegenhaltungen:
- EP-A- 0 695 879
- DE-A1- 2 945 895
- DE-A1- 10 049 505
- DE-A1- 10 108 732
- US-A1- 2005 140 362

## Beschreibung

Die Erfindung betrifft eine Vorrichtung zur Erfassung der Axialposition und Winkelposition eines in einem Gehäuse relativ zu diesem bewegbaren Körpers mit den Merkmalen des Oberbegriffs des Anspruchs 1.

Aus der US 2005/0140362 A1 ist eine aus einer Vielzahl von Magnetfeldsensoren bestehende Sensoranordnung bekannt, die sich über einen Winkelbereich erstreckt, so dass bei einer Drehbewegung eines mit einem Permanentmagneten versehenen Körpers die Winkelposition erfasst werden kann. Eine Linearbewegung dieses Körpers ist nicht vorgesehen und könnte nur mit einer riesigen Anzahl von Sensoren erfasst werden.

Eine aus der DE 29 45 895 A1 oder der EP 0695879 B1 bekannte vorrichtung dieser Gattung dient zur Erfassung der Axialposition der Kolbenstange eines Arbeitszylinders. Hierzu wird eine an der Kolbenstange in Längsrichtung angeordnete Permanentmagnetanordnung an einem oder zwei Magnetfeldsensoren im Zylinderdeckel vorbeigeführt. Damit die Permanentmagnetanordnung im Erfassungsbereich des Magnetfeldsensors bei der Bewegung der Kolbenstange verbleibt, muss diese verdrehgesichert sein, was z.B. durch eine Ausbildung der Kolbenstange mit quadratischem Querschnitt erreicht werden kann. Die Herstellung einer quadratischen Kolbenstange und einer entsprechenden Führung mit ebenfalls quadratischem Querschnitt oder einer anderen Art von Verdrehsicherheit ist jedoch aufwendig und kostenintensiv.

Eine Aufgabe der Erfindung besteht daher darin, eine vorrichtung der eingangs genannten Gattung zu schaffen, bei der die Positionserfassung auch bei einer Verdrehung eines längsverschiebbaren Körpers in exakter Weise möglich ist.

Diese Aufgabe wird erfindungsgemäß durch eine Vorrichtung mit den Merkmalen des Anspruchs 1 gelöst.

Der Vorteil der erfindungsgemäßen vorrichtung besteht insbesondere darin, dass sowohl Winkelpositionen beim Verdrehen des Körpers als auch Axialpositionen unabhängig vom jeweiligen Verdrehen exakt erfasst werden können. Der Körper kann beispielsweise rotationssymmetrisch ausgebildet sein, was zu einer einfachen und kostengünstigen Herstellung führt. Eine verdrehsicherung zur Erfassung der Axialposition ist nicht mehr erforderlich.

Zur kontinuierlichen Positionserfassung der Axialposition besteht die Permanentmagnetanordnung aus einer sich in der Längsrichtung des Körpers erstreckenden Reihe von Einzelmagneten oder Magnetisierungsbereichen, die aufeinanderfolgend abwechselnde Polaritäten besitzt, wobei der Körper auch längsverschiebbar im Gehäuse angeordnet ist. Die Breite jedes Einzelmagneten oder Magnetisierungsbereichs in der Umfangsrichtung des Körpers entspricht dabei im wesentlichen dem Abstand der Sensoren in der Umfangsrichtung. Hierdurch ist sichergestellt, dass unabhängig von der Verdrehung der Kolbenstange immer mindestens ein Sensor die Position detektieren kann.

Durch die in den Unteransprüchen aufgeführten Maßnahmen sind vorteilhafte Weiterbildungen und Verbesserungen der im Anspruch 1 angegebenen Vorrichtung möglich.

In einer vorteilhaften Weiterbildung besteht die Sensoranordnung aus Paaren von Sensoren, wobei jedes Paar aus zwei Sensoren zur Erfassung der axialen und radialen Feldkomponente des Magnetfelds der Permanentmagnetanordnung besteht. Hierdurch kann auch die Bewegungsrichtung des Körpers erfasst werden, sodass beispielsweise auch Änderungen in der Bewegungsrichtung sicher erfasst und bei der Auswertung berücksichtigt werden können. Hierzu entspricht die Länge jedes Einzelmagneten oder Magnetisierungsbereichs in der Längsrichtung des Körpers im Wesentlichen dem doppelten Abstand der Sensoren eines Sensorpaars, um sicherzustellen, dass immer ein Sensorpaar im Wirkungsbereich des Magnetfelds der Permanentmagnetanordnung ist.

Jeder Sensor der Sensoranordnung ist zweckmäßigerweise mit einer Auswerteeinrichtung zur Erfassung der Winkelposition und/oder der Längsposition des Körpers verbunden, wobei die Auswerteeinrichtung vorzugsweise einen Multiplexer und einen Mikrocontroller enthält. Hierdurch können die Signale der einzelnen Sensorpaare über den Multiplexer in den Mikrocontroller eingelesen werden, wobei dort die über die Positionsmessung relevanten Sensorpaare ausgewählt werden.

In einer vorteilhaften Ausgestaltung ist der Körper als Kolbenstange eines in einem als Zylindergehäuse ausgebildeten Gehäuse verschiebbaren Kolbens ausgebildet. Dabei eignet sich insbesondere der Zylinderdeckel des Gehäuses zur Aufnahme der Sensoranordnung.

Die Sensoren der Sensoranordnung sind in vorteilhafter Weise als Hall-Sensoren, insbesondere 2-dimensionale Hall-Sensoren und/oder MR-Sensoren (magnetoresistive Sensoren) ausgebildet.

Ein Ausführungsbeispiel der Erfindung ist in der Zeichnung dargestellt und in der nachfolgenden Beschreibung näher erläutert. Es zeigen
- Figur 1: eine Schnittdarstellung durch den Zylinderdeckel eines in Figur 2 dargestellten Arbeitszylinders entlang der Schnittlinie A-A und
- Figur 2: den Arbeitszylinder als Teildarstellung in der Draufsicht.

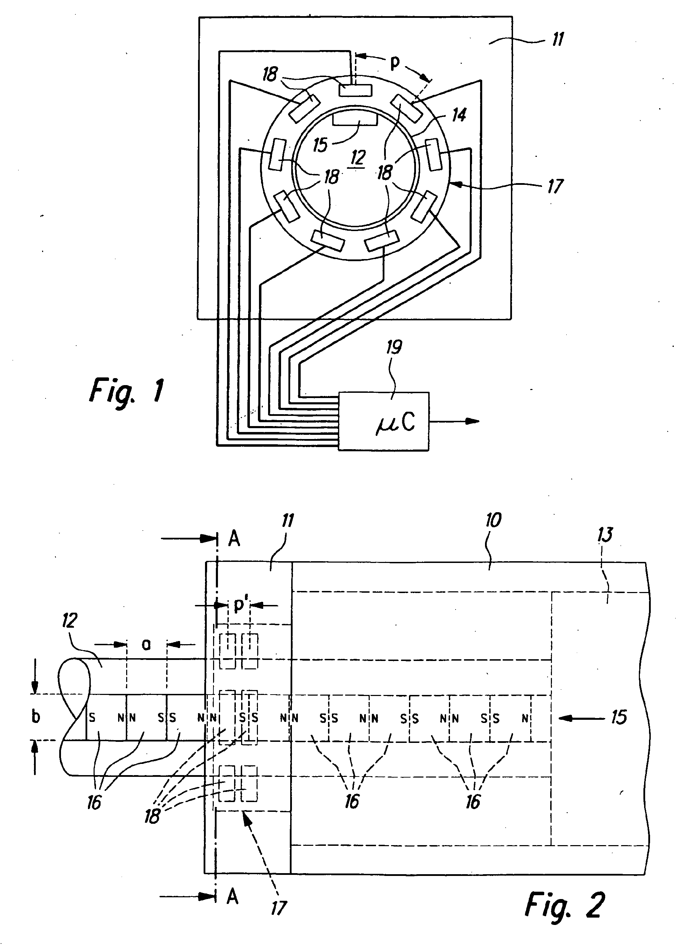

Beim in den Figuren 1 und 2 dargestellten Ausführungsbeispiel wird die erfindungsgemäße Vorrichtung zur Erfassung der Axialposition und/oder Winkelposition eines in einem Gehäuse relativ zu diesem bewegbaren Körpers in der Anwendung bei einem Arbeitszylinder 10 erläutert. Der Arbeitszylinder 10 ist durch einen Zylinderdeckel 11 auf der einen Seite abgeschlossen, wobei die nicht dargestellte gegenüberliegende Seite ebenfalls einen Zylinderdeckel aufweisen kann. Im Arbeitszylinder 10 ist ein mit einer Kolbenstange 12 versehener Kolben 13 axial- beziehungsweise längsverschiebbar geführt. Dabei wird die Kolbenstange 12 durch eine entsprechende Durchgangsöffnung 14 des Zylinderdeckels 11 hindurchgeführt. Der Kolben 13 und die Kolbenstange 12 sind rotationssymmetrisch ausgebildet, das heißt, neben der Axialbewegung ist auch eine Drehbewegung möglich.

Die Kolbenstange 12 trägt an einer Stelle ihres Außenumfangs in der Längsrichtung eine langgestreckte Permanentmagnetanordnung 15, die aus einer Vielzahl von aneinandergereihten Einzelmagneten 16 besteht, die in der Längsrichtung der Kolbenstange 12 magnetisiert sind. Durch entsprechendes Aneinanderreihen dieser Einzelmagnete 16 derart, dass jeweils gleiche Pole aneinander liegen, wird eine Magnetisierung in der Längsrichtung mit abwechselnden Nord- und Südpolen erzielt. Alternativ hierzu kann selbstverständlich auch eine streifenförmige, einstückige Permanentmagnetanordnung treten, die entsprechend magnetisiert ist.

Im Zylinderdeckel 11 ist eine Sensoranordnung 17 positioniert, die aus einer Vielzahl von magnetfeldsensitiven einzelnen Sensoren 18 besteht, die um die Durchgangsöffnung 14 herum angeordnet sind und dadurch die Kolbenstange 12 ringförmig umgreifen. Bei diesen Sensoren 18 handelt es sich bevorzugt um 2-dimensionale Hall-Sensoren, jedoch sind auch andere bekannte magnetfeldsensitive Sensoren verwendbar, z.B. eindimensionale Hall-Sensoren, MR-Sensoren od.dgl.

Die um die Durchgangsöffnung 14 herum angeordneten Sensoren 18 sind jeweils paarweise angeordnet, das heißt, jeweils zwei Sensoren sind in der Längsrichtung der Kolbenstange 12 hintereinander angeordnet. Dabei dient der jeweils eine Sensor zur Erfassung der axialen Feldkomponente und der andere zur Erfassung der radialen Feldkomponente des Magnetfelds der Permanentmagnetanordnung 15. Die beiden Sensoren eines Paars werden im Falle von 2-dimensionalen Hall-Sensoren jeweils durch einen solchen gebildet. Um sicherzustellen, dass immer mindestens ein Sensorpaar bzw. ein 2-dimensionaler Hall-Sensor die Position der Kolbenstange detektiert, entspricht die Länge a jedes Einzelmagneten 16 in der Längsrichtung der Kolbenstange 12 im Wesentlichen dem doppelten Abstand p' der beiden Sensoren 18 jedes Sensorpaars. Weiterhin ist die Breite b jedes Einzelmagneten 16 in der Umfangsrichtung der Kolbenstange 12 im Wesentlichen größer als der Abstand p der Sensorpaare in dieser Umfangsrichtung. In der Zeichnung sind diese Dimensionierungsangaben zur Vereinfachung der Darstellung nicht entsprechend wiedergegeben. Gleichwohl sind diese Dimensionierungsangaben als bevorzugt anzusehen.

Jeder Sensor 18 jedes Sensorpaars der Sensoranordnung 17 ist zur Auswertung mit einer Auswerteeinrichtung 19 verbunden. Diese Auswerteeinrichtung 19 dient zur Ermittlung der Axialposition und/oder Winkelposition der Kolbenstange 12 und damit des Kolbens 13. Hierzu enthält die Auswerteeinrichtung 19 beispielsweise einen Multiplexer, über den die Signale der einzelnen Sensorpaare in einen Mikrocontroller der Auswerteeinrichtung 19 eingelesen werden. Hierdurch wird dasjenige Sensorpaar erkannt, das gerade der Permanentmagnetanordnung 15 gegenüberliegt, sodass daraus die Winkelposition der Kolbenstange 12 ermittelt werden kann. Die Signale des auf diese Weise jeweils ausgewählten Sensorpaars dienen auch zur Erfassung der Axialposition. Bei der Bewegung der Kolbenstange 12 in der Längsrichtung erzeugt jedes Sensorpaar beim Passieren eines Einzelmagneten beziehungsweise Magnetpols ein der axialen Feldkomponente und ein der radialen Feldkomponente entsprechendes Signal. Diese Signale entsprechen einem Sinus- bzw. Cosinus-Verlauf und können durch arctan-Bildung ausgewertet werden. Durch Kombination dieser beiden Signale kann die Position sehr exakt bestimmt werden, insbesondere kann auch bestimmt werden, ob sich der Permanentmagnet rechts oder links der Sensoranordnung befindet. Durch Aufwärts- beziehungsweise Abwärtszählen der so empfangenen Signale kann die jeweilige Axialposition ermittelt werden.

Bei einer einfacheren Ausführung oder bei einer Ausführung, bei der nur die Winkelposition erfasst werden soll, kann auch auf Sensorpaare verzichtet werden, das heißt, dann sind nur Einzelsensoren ringförmig um die Durchgangsöffnung 14 beziehungsweise den Kolben 13 herum angeordnet, oder die beiden Sensoren eines Sensorpaars können in einem Sensor integriert sein bzw. - wie bereits erwähnt - als 2-dimensionaler Sensor ausgebildet sein.

Die erfindungsgemäße Vorrichtung zur Positionserfassung ist selbstverständlich nicht auf die Anwendung bei Arbeitszylindern beschränkt, sondern ist überall dort anwendbar, wo sich ein Körper in einem Gehäuse oder einer gehäuseartigen Halterung axial bewegt und/oder dreht. Dabei eignet sich die erfindungsgemäße Anordnung sowohl zur Erfassung der Axialposition allein, unabhängig von der jeweiligen Winkelposition, oder zur Erfassung der Winkelposition allein oder zur Erfassung sowohl der Axialposition als auch der Winkelposition. Soll nur die Winkelposition erfasst werden, so kann anstelle der langgestreckten Permanentmagnetanordnung 15 auch eine kurze Permanentmagnetanordnung treten, die beispielsweise nur einen einzigen Einzelmagneten aufweist.

Anstelle der in den Figuren darstellten Anordnung der ringförmigen Sensoranordnung 17 als im Zylinderdeckel 11 integrierte Anordnung oder eingesetzte Anordnung kann die Sensoranordnung 17 auch am Zylinderdeckel 11 oder einer sonstigen Stelle angeordnet sein, an der sie die Kolbenstange 12 ringförmig umgreift. Der Winkelerfassungsbereich der Sensorpaare muss dabei stets größer als der Winkelbereich des Streufelds der Permanentmagnetanordnung 15 sein.

## Patentansprüche

1. Vorrichtung zur Erfassung der Axialposition und Winkelposition eines in einem Gehäuse (10, 11) um seine Längsachse drehbar angeordneten relativ zu diesem bewegbaren Körpers (12), der an einer bestimmten Drehwinkelposition eine Permanentmagnetanordnung (15) trägt, und mit einer am oder im Gehäuse (10, 11) im Wirkungsbereich des Magnetfelds der Permanentmagnetanordnung (15) angeordneten magnetfeldsensitiven Sensoranordnung (17), die aus einer Vielzahl von ringförmig um den Körper (12) herum angeordneten Sensoren (18) besteht, **dadurch gekennzeichnet, dass** die Permanentmagnetanordnung (15) aus einer sich in der Längsrichtung des Körpers (12) erstreckenden Reihe von Einzelmagneten (16) oder Magnetisierungsbereichen besteht, die aufeinanderfolgend abwechselnde Polaritäten besitzt, und dass der Körper (12) auch längsverschiebbar im Gehäuse (10, 11) angeordnet ist.

2. Vorrichtung nach Anspruch 1, **dadurch gekennzeichnet, dass** die Breite (b) jedes Einzelmagneten (16) in der Umfangsrichtung des Körpers (12) im Wesentlichen gleich oder größer als der Abstand (p) der Sensoren (18) in der Umfangsrichtung entspricht.

3. Vorrichtung nach Anspruch 1 oder 2, **dadurch gekennzeichnet, dass** die Sensoranordnung (17) aus Paaren von Sensoren (18) besteht, wobei jedes Paar aus zwei Sensoren (18) oder einem 2-dimensionalen Sensor zur Erfassung der axialen und radialen Feldkomponente des Magnetfelds der Permanentmagnetanordnung (15) besteht.

4. Vorrichtung nach Anspruch 3, **dadurch gekennzeichnet, dass** die Länge (a) jedes Einzelmagneten (16) oder Magnetisierungsbereichs in der Längsrichtung des Körpers (12) im Wesentlichen dem doppelten Abstand (p') der Sensoren (18) eines Sensorpaars entspricht.

5. Vorrichtung nach einem der vorhergehenden Ansprüche, **dadurch gekennzeichnet, dass** jeder Sensor (18) der Sensoranordnung (17) mit einer Auswerteeinrichtung (19) zur Erfassung der Winkelposition und/oder der Axialposition (Längsposition) des Körpers (12) verbunden ist.

6. Vorrichtung nach Anspruch 5, **dadurch gekennzeichnet, dass** die Auswerteeinrichtung (19) einen Multiplexer und einen Mikrocontroller enthält.

7. Vorrichtung nach einem der vorhergehenden Ansprüche, **dadurch gekennzeichnet, dass** der Körper (12) rotationssymmetrisch ausgebildet ist.

8. Vorrichtung nach einem der vorhergehenden Ansprüche, **dadurch gekennzeichnet, dass** der Körper (12) als Kolbenstange eines in einem als Zylindergehäuse ausgebildeten Gehäuse (10, 11) verschiebbaren Kolbens (13) ausgebildet ist.

9. Vorrichtung nach Anspruch 8, **dadurch gekennzeichnet, dass** die Sensoranordnung (17) an oder im Zylinderdeckel (11) des Gehäuses (10, 11) angeordnet ist.

10. Vorrichtung nach einem der vorhergehenden Ansprüche, **dadurch gekennzeichnet, dass** die Sensoren (18) der Sensoranordnung (17) als Hall-Sensoren und/oder MR-Sensoren ausgebildet sind.

11. Vorrichtung nach Anspruch 10, **dadurch gekennzeichnet, dass** die Hall-Sensoren als 2-dimensionale Hall-Sensoren ausgebildet sind.

## Claims

1. Device for detecting the axial position and the angular position of a body (12) capable of rotating about its longitudinal axis in a housing (10, 11) and movable relative thereto, which body supports a permanent magnet arrangement (15) in a defined rotary angle position, the device comprising a magnetic field-sensitive sensor arrangement (17) located on or in the housing in the range of action of the permanent magnet arrangement (15) and consisting of a plurality of sensors (18) arranged in a ring around the body (12), **characterised in that** the permanent magnet arrangement (15) consists of a row of individual magnets (16) or magnetising regions extending in the longitudinal direction of the body (12) and having consecutively alternating polarities, and **in that** the body (12) is capable of longitudinal displacement in the housing (10, 11).

2. Device according to claim 1, **characterised in that** the width (b) of each individual magnet (16) in the circumferential direction of the body (12) is substantially equal to or greater than the distance (p) of the sensors (18) in the circumferential direction.

3. Device according to claim 1 or 2, **characterised in that** the sensor arrangement (17) consists of pairs of sensors (18), each pair comprising two sensors (18) or a 2-dimensional sensor for the detection of the axial and radial field components of the magnetic field of the permanent magnet arrangement (15).

4. Device according to claim 3, **characterised in that** the length (a) of each individual magnet (16) or magnetising region in the longitudinal direction of the body (12) substantially corresponds to twice the distance (p') of the sensors (18) of a pair of sensors.

5. Device according to any of the preceding claims, **characterised in that** each sensor (18) of the sensor arrangement (17) is connected to an evaluation device (19) for the detection of the angular position and/or of the axial position (longitudinal position) of the body (12).

6. Device according to claim 5, **characterised in that** the evaluation device (19) comprises a multiplexer and a microcontroller.

7. Device according to any of the preceding claims, **characterised in that** the body (12) is designed to be rotationally symmetric.

8. Device according to any of the preceding claims, **characterised in that** the body (12) is designed as a piston rod of a piston (13) which is displaceable in a housing (10, 11) designed as a cylinder housing.

9. Device according to claim 8, **characterised in that** the sensor arrangement (17) is located on or in the cylinder end cover (11) of the housing (10, 11).

10. Device according to any of the preceding claims, **characterised in that** the sensors (18) of the sensor arrangement (17) are designed as Hall sensors and/or MR sensors.

11. Device according to claim 10, **characterised in that** the Hall sensors are designed as 2-dimensional Hall sensors.

## Revendications

1. Dispositif destiné à la saisie de la position axiale et la position d'inclinaison d'un corps (12) disposé de manière à pouvoir tourner autour de son axe longitudinal dans un boîtier (10, 11), mobile par rapport à celui-ci et portant, sur une position d'angle de rotation déterminée, un agencement d'aimants permanents (15), et avec un ensemble de capteurs (17) sensible au champ magnétique disposé sur ou dans le boîtier (10, 11) dans la zone d'action du champ magnétique de l'agencement d'aimants permanents (15) et se composant d'une pluralité de capteurs (18) disposés en anneau autour du corps (12), **caractérisé en ce que** l'agencement d'aimants permanents (15) se compose d'une série, s'étendant dans le sens longitudinal du corps (12), d'aimants individuels (16) ou de zones de magnétisation et possédant des polarités se succédant en alternance, et **en ce que** le corps (12) est aussi disposé de manière mobile longitudinalement dans le boîtier (10, 11).

2. Dispositif selon la revendication 1, **caractérisé en ce que** la largeur (b) de chaque aimant individuel (16) dans le sens périphérique du corps (12) est sensiblement identique ou supérieure à la distance (p) entre les capteurs dans le sens périphérique.

3. Dispositif selon la revendication 1 ou 2, **caractérisé en ce que** l'ensemble de capteurs (17) se compose de paires de capteurs (18), chaque paire se composant de deux capteurs (18) ou d'un capteur à deux dimensions pour la détection des composantes axiales et radiales du champ magnétique de l'agencement d'aimants permanents (15).

4. Dispositif selon la revendication 3, **caractérisé en ce que** la longueur (a) de chaque aimant individuel (16) ou zone de magnétisation dans le sens longitudinal du corps (12) correspond sensiblement à la double distance (p') entre les capteurs (18) d'une paire de capteurs.

5. Dispositif selon l'une quelconque des revendications précédentes, **caractérisé en ce que** chaque capteur (18) de l'ensemble de capteurs (17) est relié à un dispositif d'évaluation (19) destiné à la saisie de la position d'inclinaison et/ou de la position axiale (position longitudinale) du corps (12).

6. Dispositif selon la revendication 5, **caractérisé en ce que** le dispositif d'évaluation (19) contient un multiplexeur et un microcontrôleur.

7. Dispositif selon l'une quelconque des revendications précédentes, **caractérisé en ce que** le corps (12) présente une symétrie de rotation.

8. Dispositif selon l'une quelconque des revendications précédentes, **caractérisé en ce que** le corps (12) est réalisé comme une tige d'un piston (13) mobile dans un boîtier (10, 11) formé comme un boîtier de cylindre.

9. Dispositif selon la revendication 8, **caractérisé en ce que** l'ensemble de capteurs (17) est disposé sur ou dans le couvercle de cylindre (11) du boîtier (10, 11).

10. Dispositif selon l'une quelconque des revendications précédentes, **caractérisé en ce que** les capteurs (18) de l'ensemble de capteurs (17) sont réalisés comme des capteurs à effet Hall et/ou magnétorésistifs.

11. Dispositif selon la revendication 10, **caractérisé en ce que** les capteurs à effet Hall sont réalisés comme des capteurs à effet Hall à deux dimensions.
